# EUROPÄISCHE PATENTSCHRIFT

(11) **EP 1 858 986 B1**
(45) Veröffentlichungstag und Bekanntmachung des Hinweises auf die Patenterteilung: **02.10.2013**
(21) Anmeldenummer: 06707495.5
(22) Anmeldetag: 09.03.2006
(51) Int. Cl.: C09C 1/30, C01B 33/18, C01B 33/141

(54) **WÄSSRIGE DISPERSIONEN TEILHYDROPHOBER KIESELSÄUREN**
PARTIALLY HYDROPHOBIC SILICIC ACID AQUEOUS DISPERSIONS
DISPERSIONS AQUEUSES D'ACIDES SILICIQUES PARTIELLEMENT HYDROPHOBES

(30) Priorität: 17.03.2005 DE 102005012409
(43) Veröffentlichungstag der Anmeldung: 28.11.2007
(73) Patentinhaber: Wacker Chemie AG, 81737 München (DE)
(72) Erfinder: GOTTSCHALK-GAUDIG, Torsten, 84561 Mehring (DE); OBERMEIER, Klaus, 84489 Burghausen (DE)
(74) Vertreter: Fritz, Helmut
(86) Internationale Anmeldenummer: PCT/EP2006/002181
(87) Internationale Veröffentlichungsnummer: WO 2006/097240

(56) Entgegenhaltungen:
- EP-A- 1 281 734
- EP-A1- 0 798 348
- EP-A1- 1 433 749
- WO-A-2005/092989
- US-A- 2 515 949

## Beschreibung

Die Erfindung betrifft wäßrige Dispersionen teilhydrophober Kieselsäuren, ein Verfahren zu deren Herstellung, deren Einsatz zur Stabilisierung von Emulsionen und deren Verwendung als Additiv zur Rheologiesteuerung wasserbasierender Beschichtungs-Kleb- und Dichtstoffe.

Wäßrige Dispersionen von Kieselsäuren finden Einsatz im chemisch-mechanischen Planarisieren von Metalloberflächen z.B. im Halbleiterbereich, zur Papierbeschichtung z.B. von Ink-jet-Papieren, als rheologisches Additiv bzw. Antisedimentationsmittel bei wasserbasierenden Farben, Lacken und Kleb- und Dichtstoffen, bei der Herstellung von Latexprodukten wie Handschuhe, bei der Herstellung von Gelbatterien und bei der Stabilisierung von emulgatorfreien Pickering Emulsionen.

Die Fließeigenschaften und die kolloidale Stabilität wäßriger Dispersionen von Kieselsäuren werden maßgeblich durch den pH-Wert beeinflußt.

So zeigen wäßrige Dispersionen von Kieselsäuren insbesondere bei pH-Werten im neutralen Bereich hohe Viskositäten und eine inhärente kolloidale Instabilität.

Gewöhnlich werden wäßrige Kieselsäure-Dispersionen durch Veränderung der Oberflächenladung der Kieselsäurepartikel elektrostatisch stabilisiert.

So ist aus der Schrift DE 40 06 392 bekannt, daß sich kolloidal stabile und niedrigviskose Dispersionen von hydrophilen Kieselsäuren durch Einstellen eines pH-Werts im basischen Bereich erhalten lassen.

Nachteilig ist hier, daß bei pH-Werten im Bereich des Neutralpunktes, d.h. bei einem pH von ca. 7, wie sie zahlreiche Anwendungen erfordern, besagte Dispersionen einen unkontrollierten Anstieg der Viskosität oder sogar Gelbildung aufweisen, wie beispielsweise gezeigt in D. Heath, T. F. Tadros, J. Colloid Interface Sci. 1983, 93, 320. Ein weiteres Absenken des pH-Werts über den Neutralpunkt hinaus führt dann zu einem erneuten Absinken der Viskosität. Dieses Verhalten wäßriger Dispersionen hydrophiler Kieselsäuren hat den Nachteil, daß bereits kleine Änderungen des pH-Werts, wie sie beispielsweise beim Formulieren von komplexen Mischungen auftreten können, zu nicht kontrollierbaren Schwankungen der Fleißeigenschaften der Formulierung führen können.

In EP 0798348 wird keine pyrogene Kieselsäure, sondern Fällungskieselsäure beschrieben.

WO 2005/092989 beschreibt eine partikelstabilisierte Emulsion, die einen pH Wert von 5,3 aufweist, der außerhalb des pH Werts von 7 bis 11.

Ferner ist aus den Schriften EP 1 124 693 A1, EP 736489 bzw. DE 102 38 463 A1 die Stabilisierung wäßriger Kieselsäuredispersionen mit Aluminiumsalzen und aus US 2,892,797 durch Aluminate bekannt.

Nachteilig ist hier, daß diese Dispersionen im Bereich des Neutralpunktes, d.h. bei pH 7 zur Instabilität neigen, was zu einem unkontrollierten Anstieg der Viskosität oder sogar zur Vergelung führen kann. Ferner kann der Zusatz von Aluminiumsalzen, z.B. bei bestimmten Anwendungen, wie z.B. bei der Beschichtung von Ink-jet-Papieren und bei der Rheologiesteuerung von wasserbasierenden Epoxyharzen, negative Auswirkungen haben.

Aufgabe der Erfindung ist es, die Nachteile des Standes der Technik zu überwinden und Kieselsäure-Dispersionen bereitzustellen, die bei einem hohen Feststoffgehalt im pH-Wertbereich von 5 - 12, ohne Zusatz weiterer Stabilisatoren kolloidal stabil und damit lagerfähig sind und im pH-Wertbereich von 5 - 8 kein lokales oder absolutes Viskositätsmaximum aufweisen sondern einen kontinuierlichen Anstieg der Viskosität mit sinkendem pH-Wert zeigen.

Gegenstand der Erfindung sind Kieselsäuredispersionen, dadurch gekennzeichnet, daß sie teilhydrophobe pyrogene Kieselsäure bei einem pH Wert der Dispersion von 7 bis 11 enthält und die Dispersion einen Gehalt an teilhydrophoben pyrogene Kieselsäuren von 5 - 50 Gew.% aufweist.

Kolloidal stabil bedeutet dabei, daß die Dispersionen während der Lagerung von 4 Wochen keine merkliche Zunahme der Viskosität zeigen und der mittlere Partikeldurchmesser gemessen mittels dynamischer Lichtstreuung konstant bleibt. Kolloidale Stabilität ist Voraussetzung für eine entsprechende Lagerfähigkeit. Wäßrige Dispersionen, die im Laufe der Lagerung einen unkontrollierten Anstieg der Viskosität oder sogar Vergelung zeigen, sind für eine weitere Verarbeitung häufig nicht mehr geeignet, da Verarbeitungsprozesse wie Pumpenförderung oder Rühren durch hohe Viskositäten beeinträchtigt werden.

Eine stetige Zunahme der Viskosität mit abnehmenden pH-Wert ist gegenüber der nach dem Stand der Technik bekannten schwankenden pH-Abhängigkeit von Vorteil, da beim Einstellen eines bestimmten pH-Werts nicht Bereiche unerwünschter und teilweise unkontrollierbarer hoher Viskosität und damit erschwerter Handhabbarkeit auftreten.

Überraschenderweise und in keiner Weise durch den Fachmann vorauszusehen wurde nun gefunden, daß sich bei Einsatz von teilhydrophober Kieselsäure Dispersionen mit hohen Feststoffgehalten herstellen lassen, die in dem pH-Wertbereich von 5 - 12 eine ausgezeichnete kolloidale Stabilität auch nach langer Lagerzeit aufweisen und im pH-Wertbereich von 5 - 8 kein lokales oder absolutes Viskositätsmaximum aufweisen, d.h. eine stetige Zunahme der Viskosität zeigen.

Unter teilhydrophober Kieselsäure sind in diesem Zusammenhang Kieselsäuren gemeint, wie sie in der Offenlegungsschrift EP 1 433 749 A1 beschrieben sind. Für die erfindungsgemäß eingesetzten Kieselsäuren bedeutet dies, daß die Kieselsäureoberfläche weder vollständig hydrophobiert, d.h. silyliert ist, noch daß die Kieselsäureoberfläche vollständig hydrophil ist, d.h. unsilyliert ist. Im einzelnen bedeutet dies, daß die erfindungsgemäß eingesetzten Kieselsäuren eine Silanolgruppendichte von 0,9 bis 1,7 Silanolgruppen / nm², einen Kohlenstoffgehalt von 0,1 bis 2% und eine Methanolzahl von kleiner 30 aufweisen. Die Silanolgruppendichte ist mittels Säure-Base-Titration, wie gegeben in G.W. Sears, Anal. Chem. 1956, 28, 1981, zugänglich, der Kohlenstoffgehalt kann durch Elemantaranalyse bestimmt werden und die Methanolzahl ist der prozentuale Anteil von Methanol, welcher der Wasserphase zugesetzt werden muß um vollständige Benetzung der Kieselsäure zu erreichen, d.h. ein vollständiges Einsinken der Kieselsäure in der Testflüssigkeit zu erreichen.

Zur Herstellung der erfindungsgemäßen Dispersionen werden die teilhydrophoben Kieselsäuren in die Wasserphase bei einem pH-Wert von 7 bis 11, bevorzugt bei einem pH-Wert von 8 bis 11 und besonders bevorzugt bei einem pH-Wert von 8,5 bis 10,5, zugegeben und durch spontane Benetzung, oder durch Schütteln, wie mit einem Taumelmischer, oder ein High Speed Mixer, oder durch Rühren, wie durch Balkenrührer oder Dissolver eingearbeitet. Dabei hat es sich als vorteilhaft erwiesen, den pH-Wert während der Zugabe der teilhydrophoben Kieselsäure, des Einarbeitens und der nachfolgenden Dispergierung regelmäßig zu überprüfen und gegebenenfalls bei Abweichung durch Zusatz von Säure oder Base auf den gewünschten Zielwert zu korrigieren. Zum Einstellen bzw. Korrigieren des pH-Werts können handelsübliche organische und anorganische Säuren und Basen, d.h. Brönsted-Säuren wie wäßrige oder gasförmige HCl, wäßrige oder wasserfreie HNO₃, H₂SO₄, H₃PO₄, p-Toluolsulfonsäure, Citronensäure oder Brönsted-Basen, wie wäßriger oder gasförmiger Ammoniak, wäßrige oder wasserfreie NaOH, KOH, CaCO₃, CaO, Na-Methanolat oder organische Amine eingesetzt werden.

Bei geringen Partikelkonzentrationen unter 10 Gew.% reicht im allgemeinen einfaches Rühren zur Einarbeitung der Partikel in die Flüssigkeit. Bevorzugt ist das Einarbeiten der Partikel in die Flüssigkeit bei hohem Schergefälle.

Die teilhydrophobe Kieselsäure kann vor der Einarbeitung verpackt, z.B. in Säcken, vorliegen oder in loser Form gelagert sein, z.B. in Silos oder Großgebinden. Die Zudosierung der teilhydrophoben Kieselsäuren kann über Sackschütten, Dosiersilos mit und ohne Verwägung oder durch direkte Förderung aus Lagersilos oder Großgebinden durch geeignete Förderanlagen wie Druckluftmembranpumpen oder Ventilatoren erfolgen.

Anschließend bzw. parallel zum Einarbeiten erfolgt das Dispergieren der Partikel. Bevorzugt ist paralleles Dispergieren. Paralleles Dispergieren bedeutet dabei, daß mit Beginn des Zudosierens und Einarbeitens der Kieselsäure in die wäßrige Phase der Dispergierprozeß beginnt. Dies kann durch ein Dispergiersystem in dem ersten Behältnis geschehen, oder durch Umpumpen in externen Rohrleitungen, die ein Dispergierorgan enthalten, aus dem Behältnis unter bevorzugt geschlossener Rückführung in das Behältnis. Durch eine teilweise Rückführung, und teilweise kontinuierliche Entnahme, kann dieser Prozeß bevorzugt kontinuierlich gestaltet werden.

Hierfür sind vorzugsweise schnellaufende Rührer, schnellaufende Dissolver, z.B. mit Umlaufgeschwindigkeiten von 1-50 m/s, schnellaufende Rotor-Stator Systeme, Sonolatoren, Scherspalte, Düsen oder Kugelmühlen geeignet.

Bevorzugt kann die Einarbeitung und Dispergierung der Kieselsäure mittels Induktoren, wie z.B. Conti TDS 4 der Fa. Ystral, erfolgen. Dabei wird die pulverförmige teilhydrophobe Kieselsäure durch Ansaugen, durch Vakuum oder Zwangsförderung, z.B. mittels Pumpen, direkt in den Scherspalt eindosiert.

Insbesondere geeignet ist zur Dispergierung der teilhydrophoben Kieselsäuren der Einsatz von Ultraschall im Bereich von 5 Hz bis 500 kHz, bevorzugt 10 kHz bis 100 kHz, ganz besonders bevorzugt 15 kHz bis 50 kHz; die Ultraschalldispergierung kann kontinuierlich oder diskontinuierlich erfolgen. Dies kann durch einzelne Ultraschallgeber, wie Ultraschallspitzen geschehen, oder in Durchflußsystemen, die, gegebenenfalls durch eine Rohrleitung oder Rohrwand abgetrennter Systeme, einen oder mehrere Ultraschallgeber enthalten.

Gegebenenfalls kann die Dispergierung durch Kombination verschiedener Methoden erfolgen, z.B. Vordispergierung mittels Dissolver oder Induktor mit anschließender Feindispergierung durch Ultraschallbehandlung.

Die erfindungsgemäße Herstellung kann in diskontinuierlichen und in kontinuierlichen Verfahren erfolgen. Bevorzugt sind kontinuierliche Verfahren.

Zur Herstellung der erfindungsgemäßen Dispersionen wird vorzugsweise Reinwasser, bevorzugt vollentsalztes (VE) Wasser mit einer Leitfähigkeit kleiner 100 µS/cm, verwendet.

Die erfindungsgemäßen Verfahren haben den Vorteil, daß sie sehr einfach in der Durchführung sind und wäßrige Dispersionen mit sehr hohen Feststoffgehalten an teilhydrophoben Kieselsäuren hergestellt werden können.

Die erfindungsgemäßen Dispersionen weisen vorzugsweise einen Gehalt an teilhydrophoben Kieselsäuren von 5 - 50 Gew.%, bevorzugt 5 - 35 Gew.%, besonders bevorzugt 10 - 35 Gew.% und ganz besonders bevorzugt 15 - 30 Gew.% auf.

Die erfindungsgemäßen wäßrigen Dispersionen mit hohem Gehalt an teilhydrophoben Kieselsäuren sind insbesondere dadurch gekennzeichnet, daß sie einem pH-Wert im Bereich von 7 - 11, bevorzugt 8 - 10,5 aufweisen.

Die erfindungsgemäßen wäßrigen Dispersionen mit hohem Gehalt an teilhydrophoben Kieselsäuren sind insbesondere dadurch gekennzeichnet, daß sich niedrigviskose Dispersionen mit einem pH-Wert im Bereich von 7 - 11, bevorzugt 8 - 10,5 erhalten lassen. Dies bedeutet, daß Dispersionen mit einem pH-Wert im Bereich von 7 - 11, bevorzugt 8 - 10,5 und einem Kieselsäuren-Gehalt von vorzugsweise 5 bis 50 Gew.-% eine Viskosität von kleiner 1000 mPas, bevorzugt eine Viskosität von kleiner 800 mPas, besonders bevorzugt eine Viskosität von kleiner 700 mPas aufweisen und ganz besonders bevorzugt eine Viskosität von kleiner 500 mPas aufweisen, wobei die Viskosität gemessen wurde mit einem Kegel-Platte-Sensor-System mit 105 µm Meßspalt, bei 25 °C und einer Scherrate von 100 s⁻¹.

Die erfindungsgemäßen wäßrigen Dispersionen mit hohem Gehalt an teilhydrophoben Kieselsäuren zeichnen sich ferner dadurch aus, daß bei einer schrittweisen oder kontinuierlichen Erniedrigung des Dispersions-pH-Wertes von pH 9 auf 4 die Viskosität schrittweise oder kontinuierlich ansteigt, ohne dabei ein signifikantes, d.h. über die übliche experimentelle Streuung hinausgehendes, lokales Viskositätsmaximum aufweist. Dies bedeutet insbesondere, daß der Quotient η_{7/9} = η_{7/9} aus der Scherviskosität bei pH 9 (η₉) und bei pH 7 (η₇) und der Quotient η_{4/7} = η₄/η₇ aus der Scherviskosität bei pH 7 (η₇) und bei pH 4 (η₄) jeweils einen Wert größer gleich 1, bevorzugt einen Wert 1 bis 1000, besonders bevorzugt einen Wert 1 bis 500 und ganz besonders bevorzugt einen Wert 1 bis 100 aufweist, wobei die Viskosität gemessen wurde mit einem Kegel-Platte-Sensor-System mit 105 µm Meßspalt, bei 25 °C und eine Scherrate von 100 s⁻¹.

Die erfindungsgemäßen wäßrigen Dispersionen mit hohem Gehalt an teilhydrophoben Kieselsäuren zeichnen sich ferner dadurch aus, daß sie eine ausgezeichnete Lagerstabilität aufweisen. Das heißt, daß die Viskosität einer Dispersion mit einem pH-Wert im Bereich von 7 - 11, bevorzugt 8 - 10,5 nach einer Lagerzeit von 4 Wochen bei 40 °C maximal um den Faktor 5, bevorzugt maximal um den Faktor 2,5, besonders bevorzugt maximal um den Faktor 2,0 und ganz besonders bevorzugt maximal um den Faktor 1,5 gegenüber der Viskosität ummittelbar nach Herstellen der Dispersion gestiegen ist, wobei die Viskosität gemessen wurde mit einem Kegel-Platte-Sensor-System mit 105 µm Meßspalt, bei 25 °C und eine Scherrate von 100 s⁻¹.

Die erfindungsgemäßen wäßrigen Dispersionen mit hohem Gehalt an teilhydrophoben Kieselsäuren zeichnen sich ferner dadurch aus, daß sie eine ausgezeichnete Lagerstabilität aufweisen. Das heißt, daß die Dispersionen mit einem pH-Wert im Bereich von 7 - 11, besonders bevorzugt 8 - 10,5 nach einer Lagerzeit von 4 Wochen bei 40 °C eine Fließgrenze von kleiner 100 Pa, bevorzugt kleiner 10 Pa, besonders bevorzugt kleiner 1 Pa aufweisen und ganz besonders bevorzugt kleiner 0,1 Pa, jeweils gemessen mit der Flügelkörpermethode bei 25 °C gemäß Q. D. Nguyen, D. Boger, J. Rheol. 1985, 29, 335.

Die erfindungsgemäßen Dispersionen sind ferner dadurch charakterisiert, daß sie im pH-Bereich von 5 - 12 ein negatives ZETA-Potential aufweisen. Bevorzugt ist das ZETA-Potential bei einem pH-Wert von 9 kleiner -5 mV, besonders bevorzugt kleiner -10 mV und ganz besonders bevorzugt kleiner -15 mV. Das ZETA-Potential kann beispielsweise bestimmt werden durch Messung des Kolloidvibrationspotentials z.B. mittels der ZETA-Potentialsonde DT300 der Fa. Dispersion Technologies oder durch Bestimmung der elektrophoretischen Mobilität durch Laser-Doppler-Velocemetrie mittels Zetasizer ZS der Fa. Malvern Instruments.

Die erfindungsgemäßen Dispersionen sind ferner dadurch charakterisiert, daß sie einen isoelektrischen Punkt (iep) bei einem pH-Wert < 4 aufweisen, wobei der isoelektrischen Punkt definiert ist als der pH-Wert einer Dispersion, bei der das ZETA-Potential den Wert Null aufweist.

Die erfindungsgemäßen Dispersionen sind ferner dadurch charakterisiert, daß die dispergierten Partikel in Form feinverteilter Sinteraggregate vorliegen.

Die Sinteraggregate sind dabei dadurch charakterisiert, daß bei einer Partikelgrößenbestimmung mittels quasielastischer Lichtstreuung der gemessene hydrodynamische Äquivalentdurchmesser mindestens um dem Faktor 2, bevorzugt um den Faktor 2,5 bis 50, besonders bevorzugt um den Faktor 2,8 bis 30, jeweils bezogen auf eine spezifische Oberfläche von 100 m²/g, bei kleinerer bzw. größerer Oberfläche verkleinert bzw. vergrößert sich der Faktor entsprechend linear, größer ist als der gemäß der Formel a = 6/A_{BET} * d rechnerisch erhältliche Durchmesser der Primärpartikel, wobei A_{BET} die mittels Stickstoffadsorption gemäß DIN 66131 gemessene spezifische BET-Oberfläche der hydrophilen Ausgangskieselsäure und d die Dichte der Primärpartikel ist.

Die erfindungsgemäßen Dispersionen sind ferner dadurch gekennzeichnet, daß sie gegebenenfalls Fungizide oder Bakterizide, wie Methylisothiazolone oder Benzisothiazolone enthalten.

Bevorzugt ist der Gehalt der erfindungsgemäßen wässrigen Dispersion an weiteren organischen Zuschlagstoffen außer Fungizide oder Bakterizide kleiner als 5 Gew.%, bevorzugt kleiner als 1 Gew.%, besonders bevorzugt kleiner als 0,5 Gew.%, im Besonderen kleiner als 0,1 Gew.%.

Insbesondere ist der Gehalt der erfindungsgemäßen wäßrigen Dispersionen an Dispergierhilfsmitteln wie Tensiden oder Schutzkolloiden kleiner als 5 Gew.%, bevorzugt kleiner als 1 Gew.%, besonders bevorzugt kleiner als 0,5 Gew.%, im Besonderen enthalten die erfindungsgemäßen wäßrigen Dispersionen keine Dispergierhilfsmitteln.

Bevorzugt ist der Gehalt der erfindungsgemäßen wässrigen Dispersion an organischen und anorganischen Salzen oder Elektrolyten, wie NaCl, KCl, oder AlCl₃ kleiner als 5 Gew.%, bevorzugt kleiner als 1 Gew.%, besonders bevorzugt kleiner als 0,1 Gew.%, im Besonderen kleiner als 0,01 Gew.%.

Ganz besonders bevorzugt werden der erfindungsgemäßen Dispersion keine organischen und anorganischen Salze zugefügt. Bevorzugt ist die Leitfähigkeit der erfindungsgemäßen wässrigen Dispersion bei einem pH-Wert von 9,5 kleiner 100 mS/cm, bevorzugt kleiner als 10 mS/cm, besonders bevorzugt kleiner als 5 mS/cm, im Besonderen kleiner als 1 mS/cm.

Die teilhydrophoben Kieselsäurepartikel haben vorzugsweise eine mittlere Primärteilchen-Partikelgröße d-PP von 0,5 bis 1000 nm, bevorzugt 5 bis 100 nm, besonders bevorzugt 5 bis 50 nm. Geeignete Messverfahren hierzu sind zum Beispiel die Transmissions-Elektronenmikroskopie oder Hochauflösende Rasterelektronenmikroskopie, z.B. im Feldemissionsmodus.

Die teilhydrophoben Kieselsäurepartikel haben vorzugsweise eine mittlere Sekundärstruktur- oder Aggregat-Partikelgröße d-Aggr von 50 bis 5000 nm, bevorzugt von 100 bis 800 nm, besonders bevorzugt von 120 bis 500 nm gemessen als hydrodynamischen Äquivalentdurchmesser.

Geeignete Messverfahren hierzu sind zum Beispiel die Dynamische Lichtstreuung oder Photonenkorrelationsspektroskopie, zur Messung von Konzentrationen >0,01 Gew.% in Rückstreuung ausgeführt, bzw. mittels Kreuzkorrelation gegen Mehrfachstreuung korrigiert.

Ein weiterer Gegenstand der Erfindung ist die Herstellung partikelstabilisierter O/W-Emulsionen (Pickering Emulsionen) unter Verwendung der erfindungsgemäßen Dispersionen.

Dabei zeigte sich, daß aus dem im Folgenden beschriebenen Verfahren die besten Ergebnisse resultieren.

Eine bei pH 9 niedrigviskose erfindungsgemäße Dispersion wird durch Zusatz einer Protonensäure z.B. Salzsäure auf einen pH-Wert von kleiner 5 angesäuert. In die nun höherviskose Kieselsäuredispersion wird die Ölphase einemulgiert, beispielsweise mit Hilfe eines schnellaufenden Mischgeräts wie Dissolver, Rotor-Stator-Systeme, oder an Ultraschallgebern oder anderen Emulgiermaschinen. Gegebenenfalls kann nach einemulgieren der gesamten Ölmenge zusätzlich Wasser zudosiert werden. Dies kann unter Scherbedingungen oder durch einfaches Rühren erfolgen.

Gegebenenfalls kann auch erst die Ölphase vorgelegt werden und anschließend die erfindungsgemäße Dispersion unter Rühren, z.B. mittels schnellaufender Mischgeräte wie Dissolver, Rotor-Stator-Systeme, oder an Ultraschallgebern eindispergiert werden.

Gegebenenfalls können die so erhaltenen Emulsionen nochmals zur Verbesserung der Eigenschaften einem weiteren Emulgierprozeß unterworfen werden, z.B. an Hochdruckhomogenisatoren oder Ultraschalldurchflußzellen.

Gegebenenfalls kann der pH-Wert der erhaltenen Emulsion durch Zugabe von Säure, z.B. Salzsäure, oder Base, z.B. wäßrige NaOH-Lösung, auf den gewünschten pH-Wert eingestellt werden. Dies kann unter einfachem Rühren oder unter Scherbedingungen, z.B. an einem Dissolver, erfolgen. Bevorzugt ist einfaches Einrühren.

Gegebenenfalls kann die Ionenstärke der wäßrigen Phase der Emulsion durch Zugabe von Elektrolyt, z.B. NaCl, auf die gewünschte Ionenstärke eingestellt werden um die Viskosität der Emulsion zu erhöhen. Dies kann unter einfachem Rühren oder unter Scherbedingungen, z.B. an einem Dissolver erfolgen. Bevorzugt ist einfaches Einrühren.

Zur Erhöhung der Viskosität können der Emulsion 1 · 10⁻⁴ mol/l bis 10 mol/l, bevorzugt 0,5 · 10⁻³ mol/l bis 5 mol/l und besonders bevorzugt 1 · 10⁻³ mol/l bis 1 mol/l Elektrolyt zugesetzt werden.

Die Erfindung betrifft den Einsatz der erfindungsgemäßen wässrigen Dispersionen bei der Beschichtung von Oberflächen, wie mineralische Substrate, wie Metalle, z.B. Stahl oder Eisen, z.B. mit dem Ziel des Korrosionsschutzes.

Die Erfindung betrifft den Einsatz der erfindungsgemäßen wässrigen Dispersionen bei der Herstellung von Farben und Lacken, Kunstharzen, Klebstoffen und Dichtstoffen, insbesondere solchen, die auf wässriger Basis hergestellt sind.

Die Erfindung betrifft den Einsatz der erfindungsgemäßen wässrigen Dispersionen bei der Herstellung von Farben und Lacken, Kunstharzen, Klebstoffen und Dichtstoffen, insbesondere zur Einstellung und Kontrolle der Rheologie.

Die Erfindung betrifft den Einsatz der erfindungsgemäßen wässrigen Dispersionen bei der Herstellung von Farben und Lacken, Kunstharzen, Klebstoffen und Dichtstoffen, insbesondere zur Verbesserung von deren mechanischen Eigenschaften, wie zum Bespiel der Verbesserung der Kratzfestigkeit.

Die Erfindung betrifft den Einsatz der erfindungsgemäßen wässrigen Dispersionen bei der Beschichtung von Druckmedien, insbesondere solchen Papieren die bei berührungsfreien Druckverfahren eingesetzt werden, Beispiele sind Papiere für Ink Jet Printer und im Besonderen solche Papiere mit hohem Glanz.

### Beispiele

### Beispiel 1

300 g einer teilhydrophoben pyrogenen Kieselsäure mit einem Restsilanolgehalt von 71% und einem Kohlenstoffgehalt von 0,95%, erhalten durch Umsetzung einer hydrophilen Ausgangskieselsäure mit einer spezifischen BET-Oberfläche von 200 m²/g (erhältlich unter der Bezeichnung HDK^{®} N20 bei der Wacker-Chemie GmbH, München) mit Dimethyldichlorsilan gemäß EP 1433749 A1, werden portionsweise an einem Dissolver bei 300 - 600 rpm in 1000 g vollentsalztes (VE-)Wasser eingerührt. Dabei wird der pH-Wert der Dispersion durch Zudosieren von wäßriger NaOH in einem Bereich von 9 - 9,5 gehalten. Nach vollständiger Zugabe der Kieselsäure wird noch 30 min bei 6000 rpm nachdispergiert. Die erhaltene niedrigviskose Dispersion wird anschließend bei einer Durchflußrate von 5-10 ml/min durch eine Ultraschalldurchflußzelle (Fa. Hielscher; 24 kHz; 400 W) gepumpt. Es resultiert eine dünnflüssige Kieselsäuredispersion, deren analytische Daten in Tabelle 1 zusammengefaßt sind.

### Beispiel 2

500 g einer teilhydrophoben pyrogenen Kieselsäure mit einem Restsilanolgehalt von 65% und einem Kohlenstoffgehalt von 1,4 %, erhalten durch Umsetzung einer hydrophilen Ausgangskieselsäure mit einer spezifischen BET-Oberfläche von 200 m²/g (erhältlich unter der Bezeichnung HDK^{®} N20 bei der Wacker-Chemie GmbH, München) mit Hexamethyldisilazan gemäß EP 1433749 A1, werden portionsweise an einem Dissolver bei 300 - 600 rpm in 1000 g vollentsalztes (VE-)Wasser eingerührt. Dabei wird der pH-Wert der Dispersion durch Zudosieren von wäßriger NaOH in einem Bereich von 9 - 9,5 gehalten. Nach vollständiger Zugabe der Kieselsäure wird noch 30 min bei 6000 rpm nachdispergiert. Die erhaltene niedrigviskose Dispersion wird anschließend bei einer Durchflußrate von 5-10 ml/min durch eine Ultraschalldurchflußzelle (Fa. Hielscher; 24 kHz; 400 W) gepumpt. Es resultiert eine dünnflüssige Kieselsäuredispersion, deren analytische Daten in Tabelle 1 zusammengefaßt sind.

### Beispiel 3

250 g einer teilhydrophoben pyrogenen Kieselsäure mit einem Restsilanolgehalt von 75% und einem Kohlenstoffgehalt von 1,3%, erhalten durch Umsetzung einer hydrophilen Ausgangskieselsäure mit einer spezifischen BET-Oberfläche von 300 m²/g (erhältlich unter der Bezeichnung HDK^{®} T30 bei der Wacker-Chemie GmbH, München) mit Dimethyldichlorsilan gemäß EP 1433749 A1, werden portionsweise an einem Dissolver bei 300 - 600 rpm in 1000 g vollentsalztes (VE-)Wasser eingerührt. Dabei wird der pH-Wert der Dispersion durch Zudosieren von wäßriger NaOH in einem Bereich von 9 - 9,5 gehalten. Nach vollständiger Zugabe der Kieselsäure wird noch 30 min bei 6000 rpm nachdispergiert. Die erhaltene niedrigviskose Dispersion wird anschließend bei einer Durchflußrate von 5-10 ml/min durch eine Ultraschalldurchflußzelle (Fa. Hielscher; 24 kHz; 400 W) gepumpt. Es resultiert eine dünnflüssige Kieselsäuredispersion, deren analytische Daten in Tabelle 1 zusammengefaßt sind.

### Beispiel 4

300 g einer teilhydrophoben pyrogenen Kieselsäure mit einem Restsilanolgehalt von 71% und einem Kohlenstoffgehalt von 0,95%, erhalten durch Umsetzung einer hydrophilen Ausgangskieselsäure mit einer spezifischen BET-Oberfläche von 200 m²/g (erhältlich unter der Bezeichnung HDK^{®} N20 bei der Wacker-Chemie GmbH, München) mit Dimethyldichlorsilan gemäß EP 1433749 A1, werden portionsweise an einem Dissolver bei 300 - 600 rpm in 1000 g vollentsalztes (VE-)Wasser eingerührt. Dabei wird der pH-Wert der Dispersion durch Zudosieren von wäßriger NaOH in einem Bereich von 9 - 9,5 gehalten. Nach vollständiger Zugabe der Kieselsäure wird der pH-Wert durch Zugabe von wäßriger HCl-Lösung (1 molar) auf 8 eingestellt und anschließend noch 30 min bei 6000 rpm nachdispergiert. Die erhaltene niedrigviskose Dispersion wird anschließend bei einer Durchflußrate von 5-10 ml/min durch eine Ultraschalldurchflußzelle (Fa. Hielscher; 24 kHz; 400 W) gepumpt. Es resultiert eine dünnflüssige Kieselsäuredispersion, deren analytische Daten in Tabelle 1 zusammengefaßt sind.

### Beispiel 5

300 g einer teilhydrophoben pyrogenen Kieselsäure mit einem Restsilanolgehalt von 71% und einem Kohlenstoffgehalt von 0,95%, erhalten durch Umsetzung einer hydrophilen Ausgangskieselsäure mit einer spezifischen BET-Oberfläche von 200 m²/g (erhältlich unter der Bezeichnung HDK^{®} N20 bei der Wacker-Chemie GmbH, München) mit Dimethyldichlorsilan gemäß EP 1433749 A1, werden portionsweise an einem Dissolver bei 300 - 600 rpm in 1000 g vollentsalztes (VE-)Wasser eingerührt. Dabei wird der pH-Wert der Dispersion durch Zudosieren von wäßriger NaOH in einem Bereich von 9 - 9,5 gehalten. Nach vollständiger Zugabe der Kieselsäure wird der pH-Wert durch Zugabe von wäßriger NaOH-Lösung (1 molar) auf 10 eingestellt und anschließend noch 30 min bei 6000 rpm nachdispergiert. Die erhaltene niedrigviskose Dispersion wird anschließend bei einer Durchflußrate von 5-10 ml/min durch eine Ultraschalldurchflußzelle (Fa. Hielscher; 24 kHz; 400 W) gepumpt. Es resultiert eine dünnflüssige Kieselsäuredispersion, deren analytische Daten in Tabelle 1 zusammengefaßt sind.

### Beispiel 6 (Vergleichsbeispiel)

300 g einer teilhydrophoben pyrogenen Kieselsäure mit einem Restsilanolgehalt von 71% und einem Kohlenstoffgehalt von 0,95%, erhalten durch Umsetzung einer hydrophilen Ausgangskieselsäure mit einer spezifischen BET-Oberfläche von 200 m²/g (erhältlich unter der Bezeichnung HDK^{®} N20 bei der Wacker-Chemie GmbH, München) mit Dimethyldichlorsilan gemäß EP 1433749 A1, werden portionsweise an einem Dissolver bei 300 - 600 rpm in 1000 g vollentsalztes (VE-)Wasser eingerührt. Dabei wird der pH-Wert der Dispersion durch Zudosieren von wäßriger NaOH in einem Bereich von 9 - 9,5 gehalten. Nach vollständiger Zugabe der Kieselsäure wird der pH-Wert durch Zugabe von wäßriger HCl-Lösung (1 molar) auf 4 eingestellt und anschließend noch 30 min bei 6000 rpm nachdispergiert. Die erhaltene Dispersion wird anschließend bei einer Durchflußrate von 5-10 ml/min durch eine Ultraschalldurchflußzelle (Fa. Hielscher; 24 kHz; 400 W) gepumpt. Es resultiert eine Kieselsäuredispersion, deren analytische Daten in Tabelle 1 zusammengefaßt sind.

**Tabelle 1:**

| | Kieselsäure [%] | pH-Wert | Zeta-Potential [mV] ; (pH 9) | η / Pas (pH 9) | η / Pas (pH 7) | η / Pas (pH 4) | d_{Agg} / nm (pH 9) | ηᵣₑₗ*⁾ |
|---|---|---|---|---|---|---|---|---|
| Beispiel 1 | 23,0 | 9,1 | -19,6 | 0,011 | 0,14 | 0,42 | 146 | 1,01 |
| Beispiel 2 | 33,2 | 9,05 | -18,3 | 0,18 | 0,27 | 0,78 | 183 | 1,0 |
| Beispiel 3 | 19,8 | 9,23 | -20,5 | 0,012 | 0,11 | 0,38 | 175 | 1,12 |
| Beispiel 4 | 23,1 | 8,03 | -15,1 (pH 8) | 0,08 (pH 8) | 0,17 | 0,48 | 152 (pH 8) | 1,08 |
| Beispiel 5 | 22,7 | 10,04 | -22,4 (pH 10) | 0,01 (pH 10) | 0,15 | 0,47 | 150 (pH 10) | 0,98 |
| Beispiel 6 | 22,6 | 4,1 | -8,3 (pH 4) | -- | -- | 0,41 | 210 (pH 4) | 5,2 |

| | | | | | | | | |
|---|---|---|---|---|---|---|---|---|
| *⁾ ηᵣₑₗ : Quotient aus der Viskosität der Dispersion nach 4 Wochen bei 40 °C dividiert durch die Viskosität der Dispersion unmittelbar nach Herstellung; jeweils gemessen beim pH-Wert der fertigen Dispersion bei 25 °C bei einer Scherrate von D = 100 s⁻¹ mittels Kegel-Platte-System. | | | | | | | | |

- Feststoffgehalt der Dispersion bestimmt nach folgender Methode: 10 g wässrige Dispersion werden in einer Porzellanschale mit der gleichen Menge Ethanol versetzt und in einem N₂-gespülten Trockenschrank bei 150 °C zur Gewichtskonstanz eingedampft. Die Masse mₛ des trockenen Rückstandes ergibt den Feststoffgehalt gemäß Feststoffgehalt / % mₛ * 100 / 10 g.
- ZETA-Potential der Dispersionen gemessen nach folgender Methode: Eine Dispersion wird mit VE-Wasser mit identischem pH-Wert wie die Dispersion auf ca. 1,5 Gew.% Kieselsäure verdünnt. An einem Zetasizer ZS der Fa. Malvern Instruments wird das ZETA-Potential über den pH-Wert-Bereich von 9,5 bis 2 gemessen, wobei die pH-Einstellung mittels Autotitrator in pH-Wert-Schritten von 1 erfolgt.
- Viskosität der Dispersion bestimmt mit einem Rheometer. RS 600 der Fa. Haake mit Kegel-Platte-Sensorsystem (105 µm Meßspalt) bei 25 °C und einer Scherrate D = 100 s⁻¹.
- Mittlerer Durchmesser der Sinteraggregate gemessen mittels Photonenkorrelationsspektroskopie nach folgender Methode: Eine Dispersion wird mit VE-Wasser mit identischem pH-Wert wie die Dispersion auf ca. 0,3 Gew.% Kieselsäure verdünnt. An einem Zetasizer ZS der Fa. Malvern Instruments wird die Probe bei 25 °C in Rückstreuung vermessen. Der mittlere Durchmesser der Aggregate ist der z-Average (Kumulantenmittel) und entspricht dem hydrodynamischen Äquivalenzdurchmesser der Kieselsäure-Aggregate.
- pH-Wert gemessen mittels pH-Einstabmesskette

### Beispiel 7 (Herstellung einer Emulsion

54 g der in Beispiel 1 beschriebenen Kieselsäuredispersion mit einem Feststoffgehalt von 23 Gew.% werden in einem 500 ml Edelstahlbecher vorgelegt. Durch Zusatz von wäßriger HCl wird ein pH-Wert von ca. 5 eingestellt. Zu der nun höherviskosen Suspension werden unter Rühren bei 10000 rpm mit einem Ultraturrax und Wasserkühlung über einem Zeitraum von ca. 15 min langsam 150 g eines Polydimethylsiloxans mit einer Viskosität von 100 mPas (erhältlich unter dem Namen "AK100" bei Wacker-Chemie GmbH, D-München) zudosiert. Dabei sollte die Temperatur der Mischung nicht über 60 °C steigen. Zu dieser nun hochviskosen standfesten Masse werden anschließend 108 g VE-Wasser ebenfalls bei 10000 rpm langsam über einen Zeitraum von 15 min zugegeben. Dabei sollte die Temperatur der Mischung nicht über 60 °C steigen. Es resultiert eine dünnflüssige weiße O/W-Emulsion, deren analytische Daten in Tabelle 2 zusammengefaßt sind.

**Tabelle 2:**

| | d₅₀ / µm | pH-Wert | η/ Pas (pH 5,45) |
|---|---|---|---|
| Beispiel 7 | 5,4 | 5,45 | 0,152 |

- Mittlerer Tropfendurchmesser d₅₀ gemessen mittels Fraunhofer-Laserbeugung an einem Sympatec Helos/BF in Küvetten-Meßtechnik.
- pH-Wert gemessen mittels pH-Einstabmesskette Viskosität der Emulsion bestimmt mit einem Rheometer RS 600 der Fa. Haake mit Kegel-Platte-Sensorsytem (105 µm Meßspalt) bei 25 °C und einer Scherrate D = 10 s⁻¹.

## Patentansprüche

1. Kieselsäure-Dispersion, **dadurch gekennzeichnet, daß** sie teilhydrophobe pyrogene Kieselsäure bei einem pH Wert der Dispersion von 7 bis 11 enthält und die Dispersion einen Gehalt an teilhydrophoben pyrogene Kieselsäuren von 5 - 50 Gew.% aufweist.

2. Kieselsäure-Dispersion nach Anspruch 1, **dadurch gekennzeichnet, daß** die Dispersion eine Viskosität von kleiner 1000 mPa·s bei einem Kieselsäuregehalt von 5 - 50 Gew.% und einer Scherrate von 100 s⁻¹ aufweist.

3. Kieselsäure-Dispersion nach einem der Ansprüche 1 bis 2, **dadurch gekennzeichnet, daß** die Viskosität der Dispersion sich kontinuierlich erhöht, wenn der pH Wert von pH 9 bis pH 4 gesenkt wird.

4. Kieselsäure-Dispersion nach einem der Ansprüche 1 bis 3, **dadurch gekennzeichnet, daß** sie über den pH Bereich von 9 auf 4 kein lokales Viskositätsmaximum aufweist.

5. Kieselsäure-Dispersion nach Anspruch 1, **dadurch gekennzeichnet, daß** sie eine Lagerstabilität aufweist, bei der die Viskosität der Dispersion mit einem pH-Wert im Bereich von 7 bis 11 nach einer Lagerzeit von 4 Wochen bei 40 °C maximal um den Faktor 5 gegenüber der Viskosität ummittelbar nach Herstellen der Dispersion gestiegen ist, wobei die Viskosität gemessen wurde mit einem Kegel-Platte-Sensor-System mit 105 µm Meßspalt, bei 25 °C und eine Scherrate von 100 s⁻¹.

6. Kieselsäure-Dispersion nach einem oder mehreren der Ansprüche 1 bis 5, **dadurch gekennzeichnet, daß** die teilhydrophoben Kieselsäurepartikel eine mittlere Aggregat-Partikelgröße von 50 bis 5000 nm, gemessen als hydrodynamischen Äquivalentdurchmesser, aufweisen.

7. O/W Pickering-Emulsion, **dadurch gekennzeichnet, daß** sie eine Kieselsäure-Dispersion nach einem oder mehreren der Ansprüche 1 bis 6 aufweist.

8. O/W Pickering-Emulsion nach Anspruch 7, **dadurch gekennzeichnet, daß** sie Elektrolyte zur Erhöhung der Viskosität enthält.

9. Farben, Lacke, Kunstharze, Klebstoffe, Dichtstoffe und Papierbeschichtungen, **dadurch gekennzeichnet, daß** sie eine Kieselsäure-Dispersion nach einem oder mehreren der Ansprüche 1 bis 6 enthalten.

## Claims

1. Silica dispersion **characterized in that** it comprises partially hydrophobic fumed silica at a dispersion pH of 7 to 11 and the dispersion has a partially hydrophobic fumed silicas content of 5% - 50% by weight.

2. Silica dispersion according to Claim 1, **characterized in that** the dispersion has a viscosity of less than 1000 mPa·s at a silica content of 5% - 50% by weight and a shear rate of 100 s⁻¹.

3. Silica dispersion according to any one of Claims 1 and 2, **characterized in that** the dispersion viscosity increases continuously when the pH is lowered from 9 to 4.

4. Silica dispersion according to any one of Claims 1 to 3, **characterized in that** it has no local viscosity maximum over the pH range from 9 to 4.

5. Silica dispersion according to Claim 1, **characterized in that** it has a storage stability for which the viscosity of the dispersion having a pH in the range from 7 to 11 after a storage time of 4 weeks at 40°C has risen by not more than a factor of 5 as compared with the viscosity immediately after preparation of the dispersion, the viscosity being measured using a cone-plate sensor system with a 105 µm measuring gap, at 25°C and a shear rate of 100 s⁻¹.

6. Silica dispersion according to one or more of Claims 1 to 5, **characterized in that** the partially hydrophobic silica particles have an average aggregate particle size of 50 to 5000 nm, measured as the hydrodynamic equivalent diameter.

7. O/W Pickering emulsion **characterized in that** it comprises a silica dispersion according to one or more of Claims 1 to 6.

8. O/W Pickering emulsion according to Claim 7, **characterized in that** it comprises electrolytes for increasing the viscosity.

9. Ink, paint, synthetic resin, adhesive, sealant or paper coating **characterized in that** it comprises a silica dispersion according to one or more of Claims 1 to 6.

## Revendications

1. Dispersion de silice, **caractérisée en ce qu'**elle contient une silice pyrogénée partiellement hydrophobe à un pH de la dispersion de 7 à 11 et la dispersion présente une teneur en silices pyrogénées partiellement hydrophobes de 5 à 50 % en poids.

2. Dispersion de silice selon la revendication 1, **caractérisée en ce que** la dispersion présente une viscosité inférieure à 1 000 mPa·s à une teneur en silice de 5 à 50 % en poids et à un taux de cisaillement de 100 s⁻¹.

3. Dispersion de silice selon l'une quelconque des revendications 1 à 2, **caractérisée en ce que** la viscosité de la dispersion augmente en continu lorsque le pH est abaissé de pH 9 à pH 4.

4. Dispersion de silice selon l'une quelconque des revendications 1 à 3, **caractérisée en ce qu'**elle ne présente pas de maximum de viscosité local dans la plage de pH allant de 9 à 4.

5. Dispersion de silice selon la revendication 1, **caractérisée en ce qu'**elle présente une stabilité au stockage selon laquelle la viscosité de la dispersion d'un pH dans la plage allant de 7 à 11 après un temps de stockage de 4 semaines à 40 °C augmente au plus d'un facteur de 5 par rapport à la viscosité directement après la fabrication de la dispersion, la viscosité étant mesurée avec un système de détecteur à cône et plaque présentant une fente de mesure de 105 µm, à 25 °C et à un taux de cisaillement de 100 s⁻¹.

6. Dispersion de silice selon une ou plusieurs des revendications 1 à 5, **caractérisée en ce que** les particules de silice partiellement hydrophobes présentent une taille de particule d'agrégat moyenne de 50 à 5 000 nm, mesurée en tant que diamètre équivalent hydrodynamique.

7. Émulsion de Pickering H/E, **caractérisée en ce qu'**elle comprend une dispersion de silice selon une ou plusieurs des revendications 1 à 6.

8. Émulsion de Pickering H/E selon la revendication 7, **caractérisée en ce qu'**elle contient des électrolytes pour augmenter la viscosité.

9. Peintures, laques, résines artificielles, adhésifs, agents d'étanchéité et revêtements pour papier, **caractérisés en ce qu'**ils contiennent une dispersion de silice selon une ou plusieurs des revendications 1 à 6.
